# FASCICULE DE BREVET EUROPEEN

(11) **EP 0 909 664 B1**
(45) Date de publication et mention de la délivrance du brevet: **06.08.2003**
(21) Numéro de dépôt: 98460043.7
(22) Date de dépôt: 13.10.1998
(51) Int. Cl.: B60B 29/00, B66F 7/24, B66F 5/02

(54) **Chariot de remorquage et/ou de manutention pour le dépannage d'un véhicule monté sur roues**
Hubwagen zum Abschleppen oder Handhaben für das Bergen von Fahrzeugen mit Rädern
Dolly for towing and/or handling for the recovery of vehicles mounted on wheels

(30) Priorité: 16.10.1997 FR 9713255; 21.11.1997 FR 9714877
(43) Date de publication de la demande: 21.04.1999
(73) Titulaire: Tortellier, Christian, 35530 Servon sur Vilaine (FR)
(72) Inventeur: Tortellier, Christian, 35530 Servon sur Vilaine (FR)
(74) Mandataire: Vidon, Patrice

(56) Documents cités:
- FR-A- 687 875
- US-A- 3 964 729
- US-A- 4 690 605
- US-A- 5 248 235
- US-A- 5 464 315

## Description

Le domaine de l'invention est celui du dépannage des véhicules montés sur roues, tels que notamment mais non exclusivement les automobiles.

Par dépannage, on entend ici aussi bien le déplacement d'un véhicule sur une longue distance (plusieurs kilomètres) - on parle alors de remorquage - que sur une faible distance (quelques mètres) - on parle alors de manutention. Typiquement, le remorquage consiste à ramener un véhicule accidenté ou en panne jusqu'à un garage, alors que la manutention consiste à déplacer le véhicule à l'intérieur ou à proximité du garage.

Plus précisément, l'invention concerne un chariot, du type permettant de lever et supporter au moins une roue d'un véhicule, en vue de son remorquage et/ou de sa manutention.

Généralement, le chariot est monté soit sur roulettes fixes soit sur roulettes pivotantes, selon qu'il est utilisé pour le remorquage ou la manutention.

Dans la suite de la description, on considère le cas où le véhicule à déplacer (remorquage ou manutention) est une automobile. Il est clair cependant que la présente invention s'applique à tout type de véhicule à déplacer dès lors qu'il est monté sur roues.

De façon classique, un véhicule de dépannage est équipé, à l'arrière, d'un dispositif de levage et de remorquage, constitué par exemple d'un bras de levage coudé, d'une flèche et d'un berceau.

Pour remorquer une automobile en panne ou accidentée ou encore devant être mise en fourrière, le véhicule de dépannage, grâce au dispositif de levage et de remorquage dont il est muni, lève les roues avant (ou arrière) de l'automobile, le remorquage s'effectuant sur les roues arrière (ou avant) qui restent au sol.

Cependant, dans certains cas, et notamment lors de l'enlèvement en fourrière, l'opérateur ne doit pas faire rouler l'automobile sur ses propres roues afin de ne pas détériorer ses organes mécaniques (puisque le frein à main peut être bloqué ou une vitesse enclenchée, ou encore l'automobile peut être équipée d'une boîte de vitesse automatique).

Il est connu dans de tels cas d'utiliser des chariots de remorquage. Deux chariots sont glissés sous les roues arrière (ou avant) de l'automobile (un chariot sous chaque roue), de façon à soulever ces roues et éviter de les faire rouler sur le sol.

Dans le cas de la manutention, l'automobile doit être déplacée sur place, par exemple dans un garage ou dans un parking (il peut s'agir de la rendre accessible à un véhicule de dépannage). De même que pour le remorquage, il est interdit de faire rouler l'automobile sur ses propres roues. On glisse donc un chariot sous chacune des roues avant (ou arrière). On peut même glisser un chariot sous chacune des quatre roues, si l'on souhaite déplacer l'automobile en rotation sur elle-même, sans l'aide d'un véhicule de dépannage.

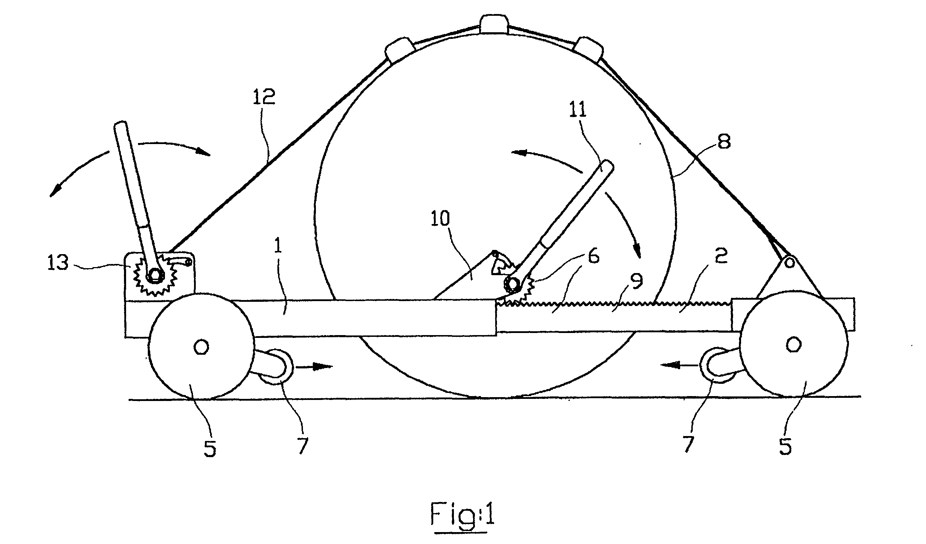

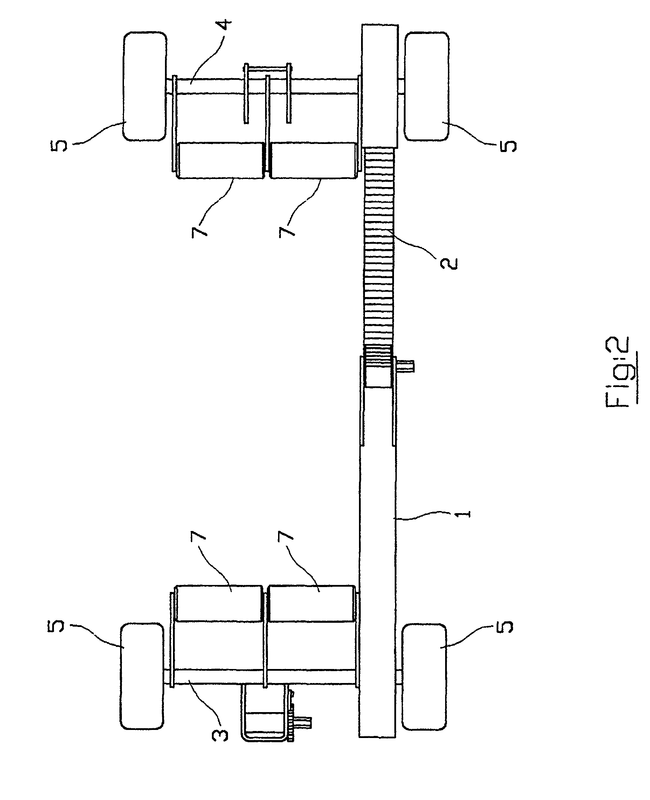

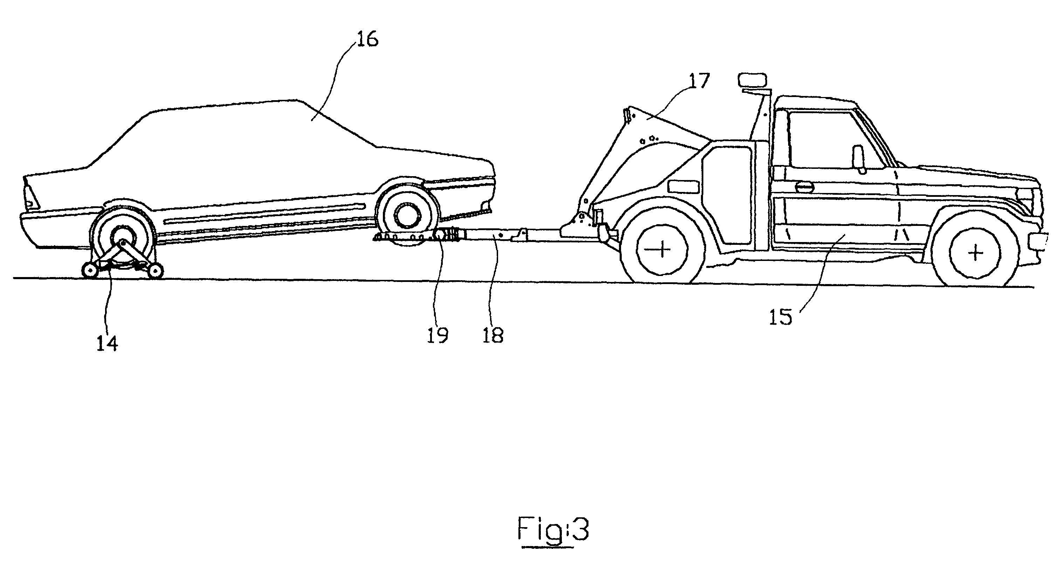

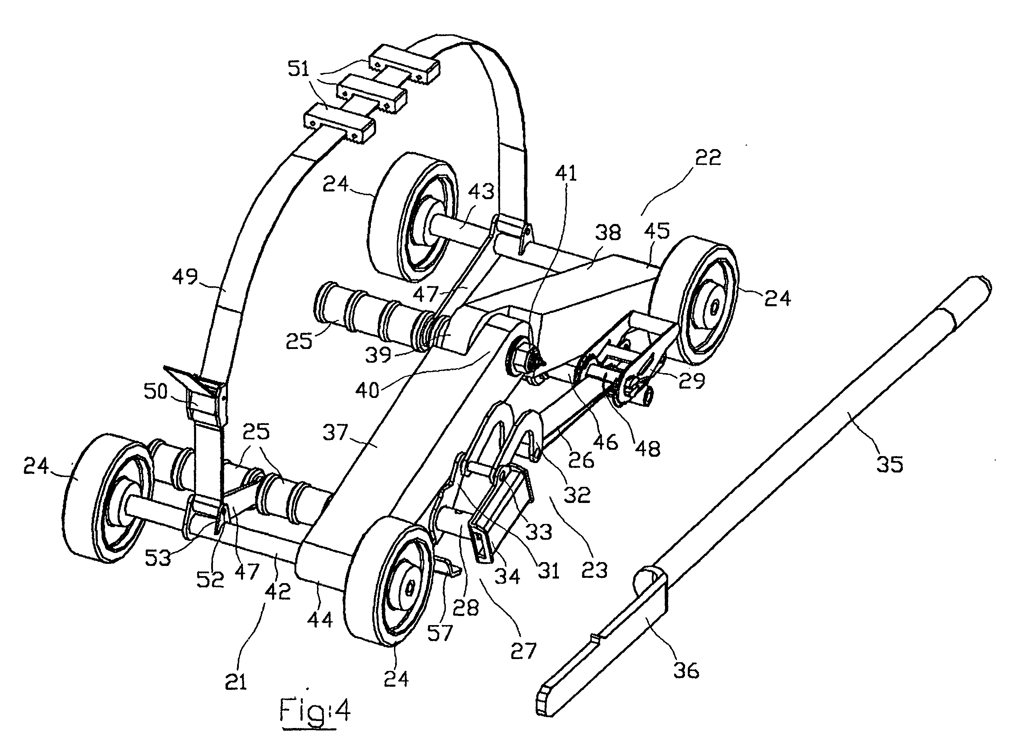

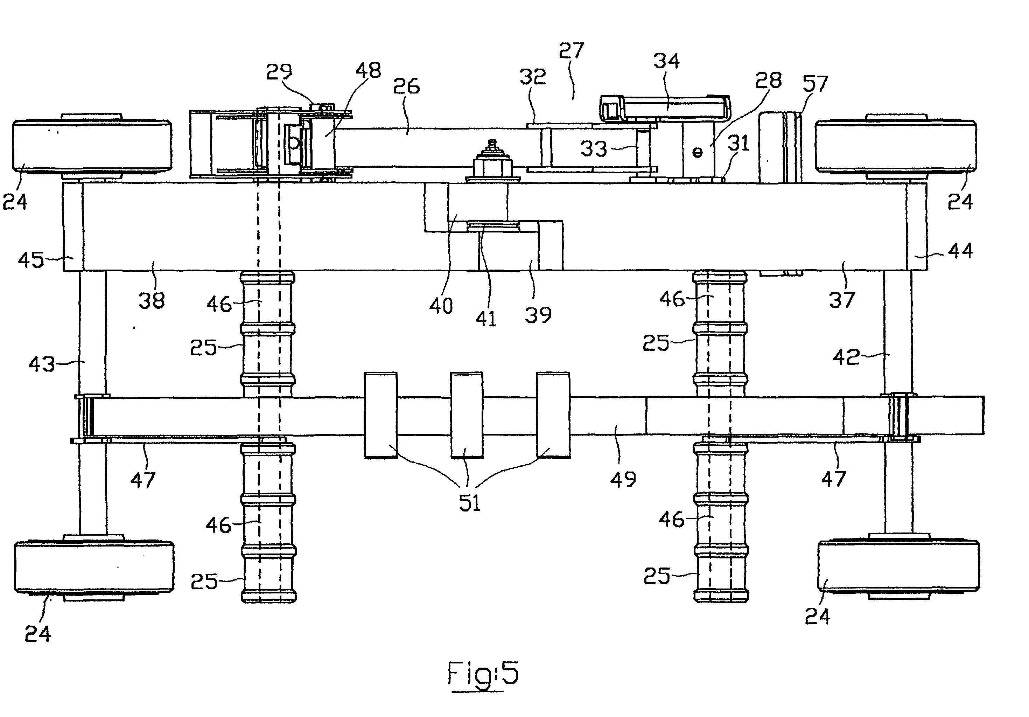

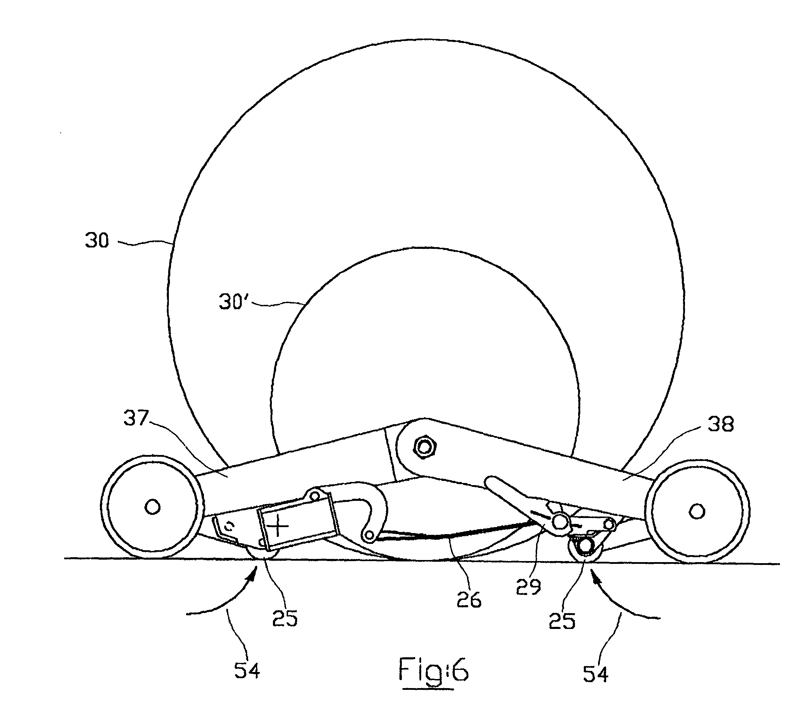

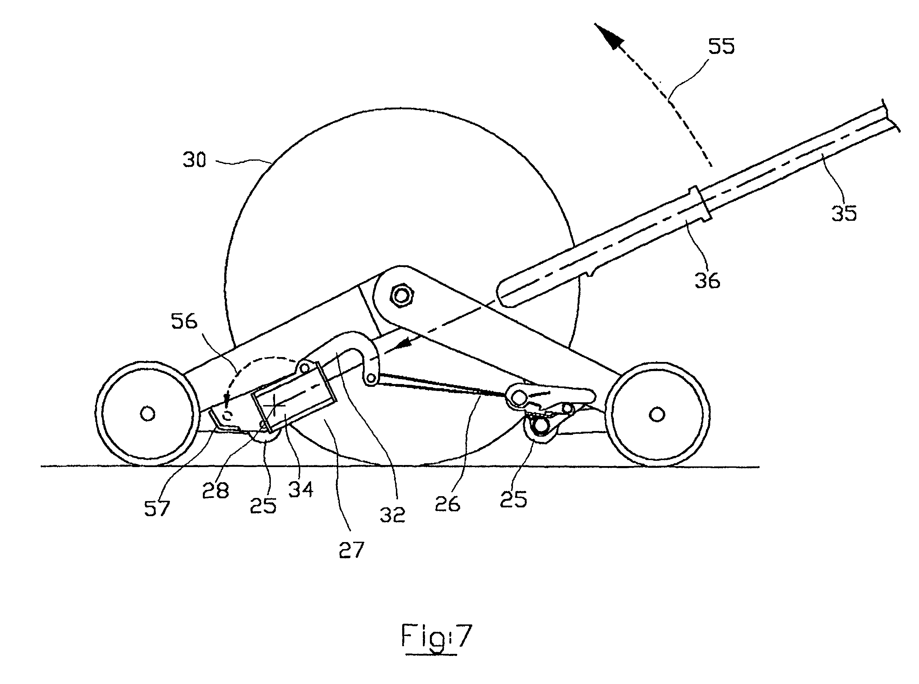

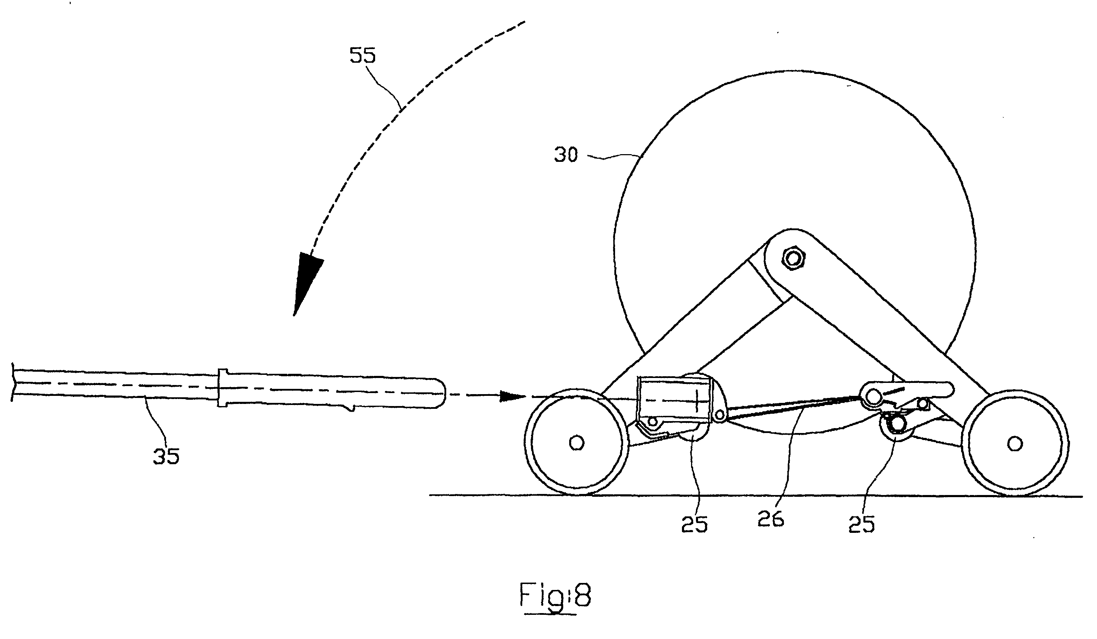

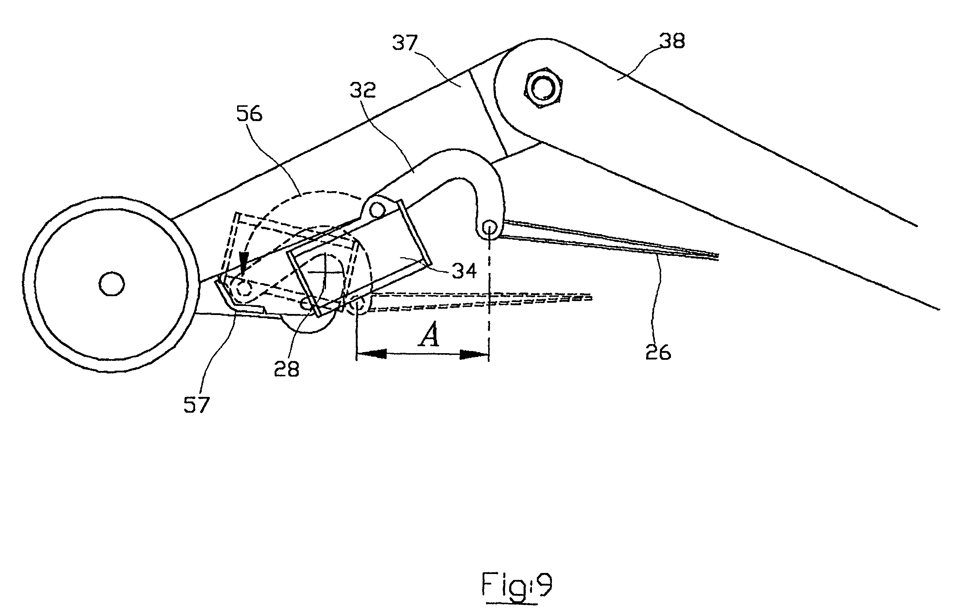

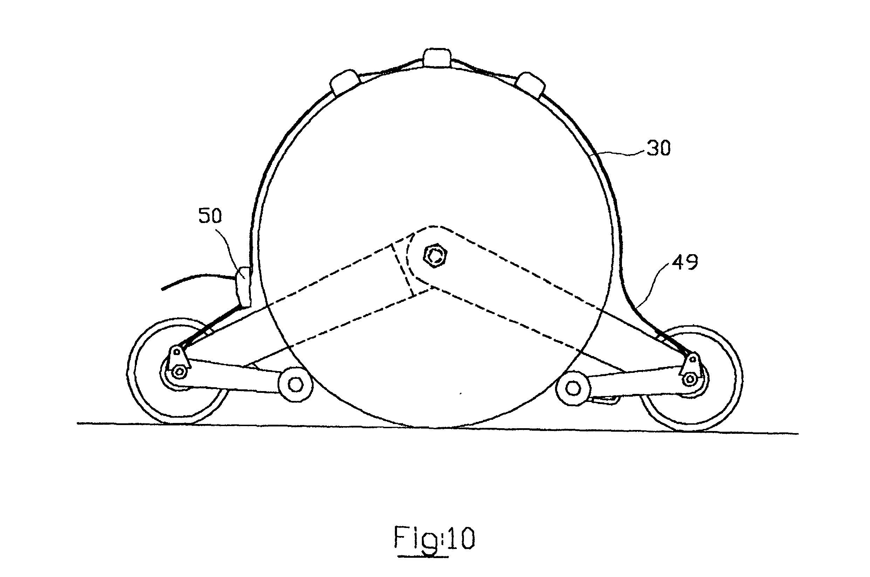

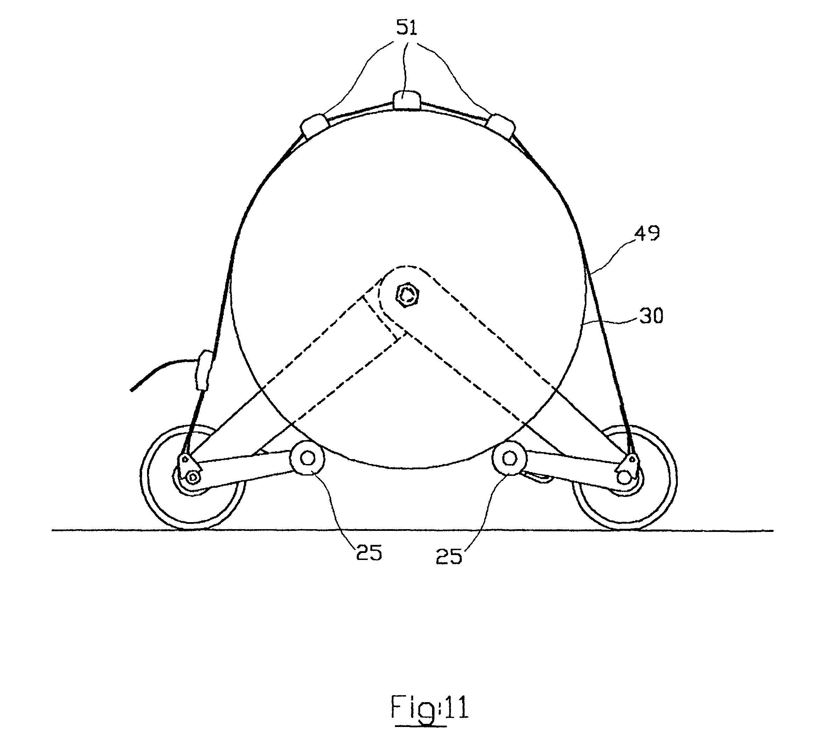

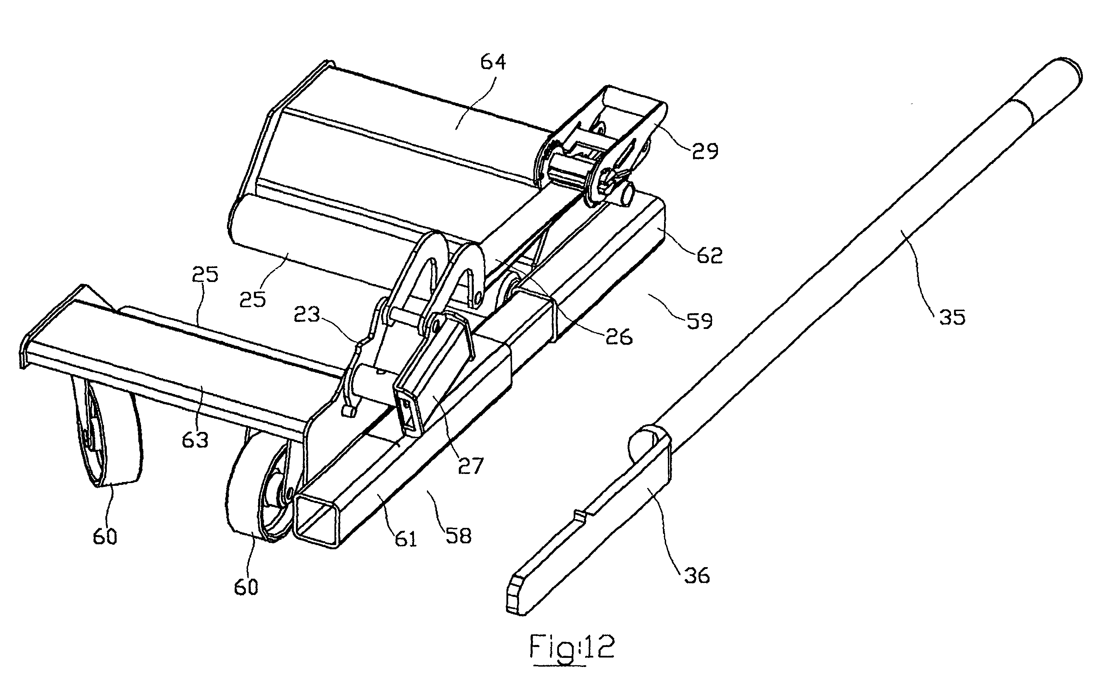

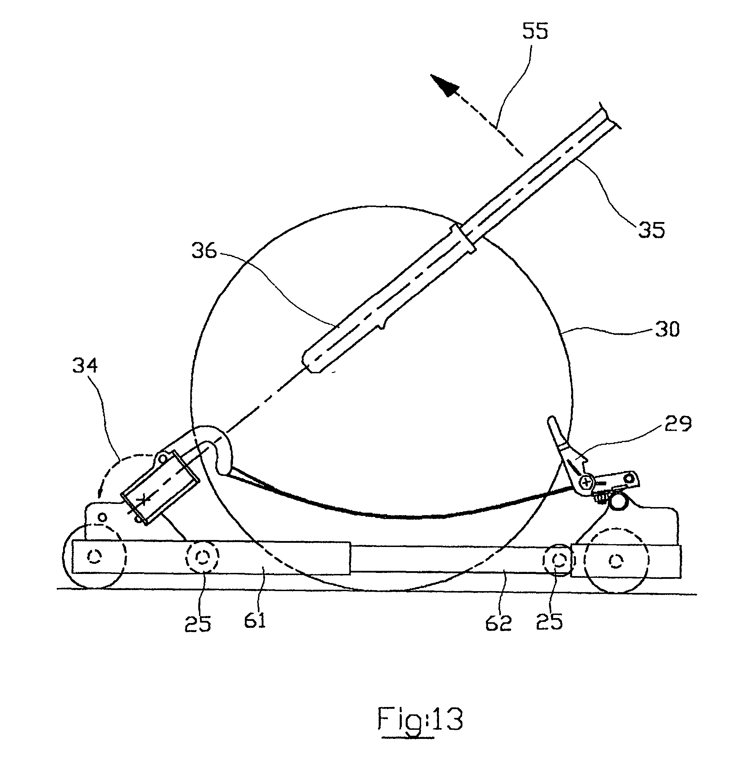

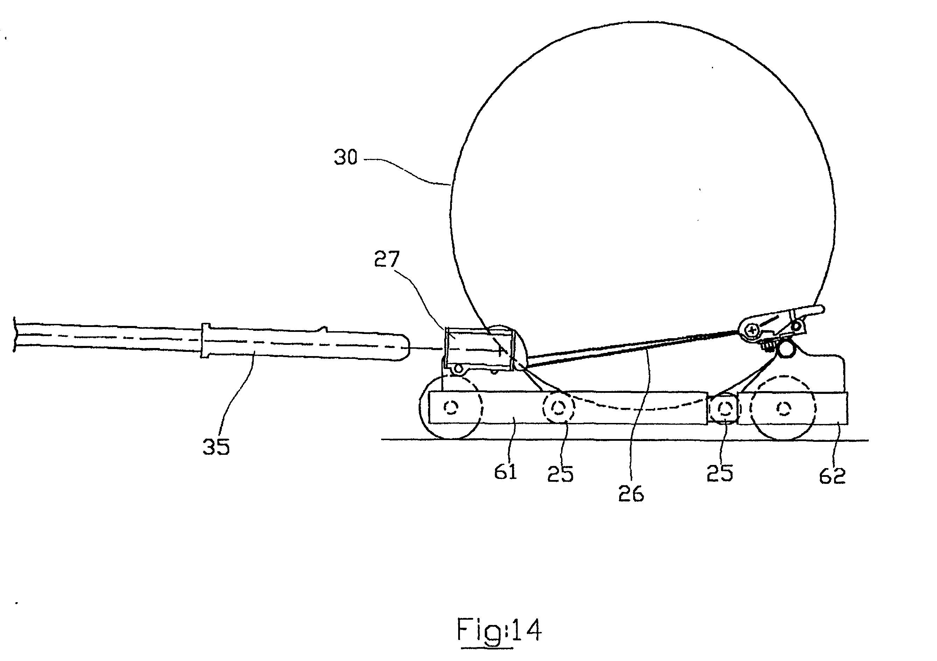

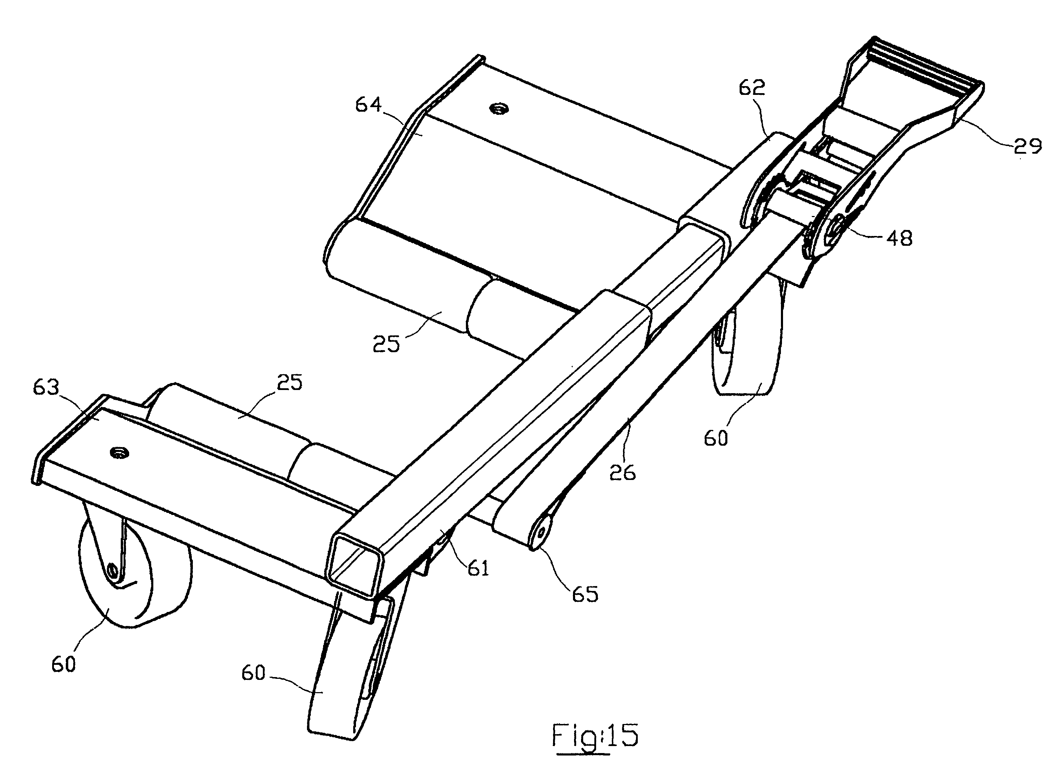

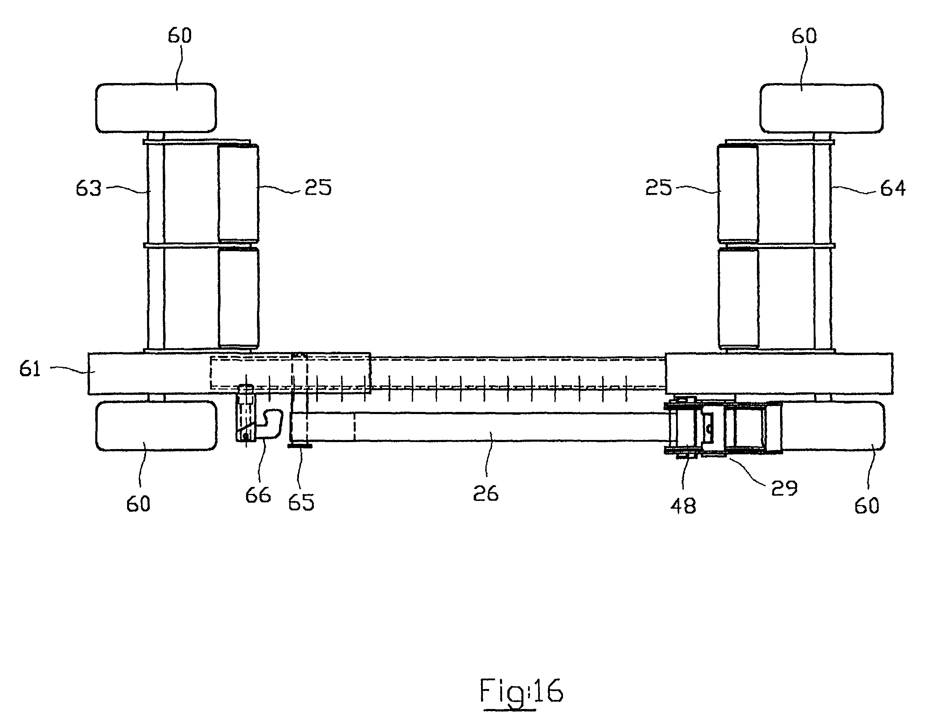

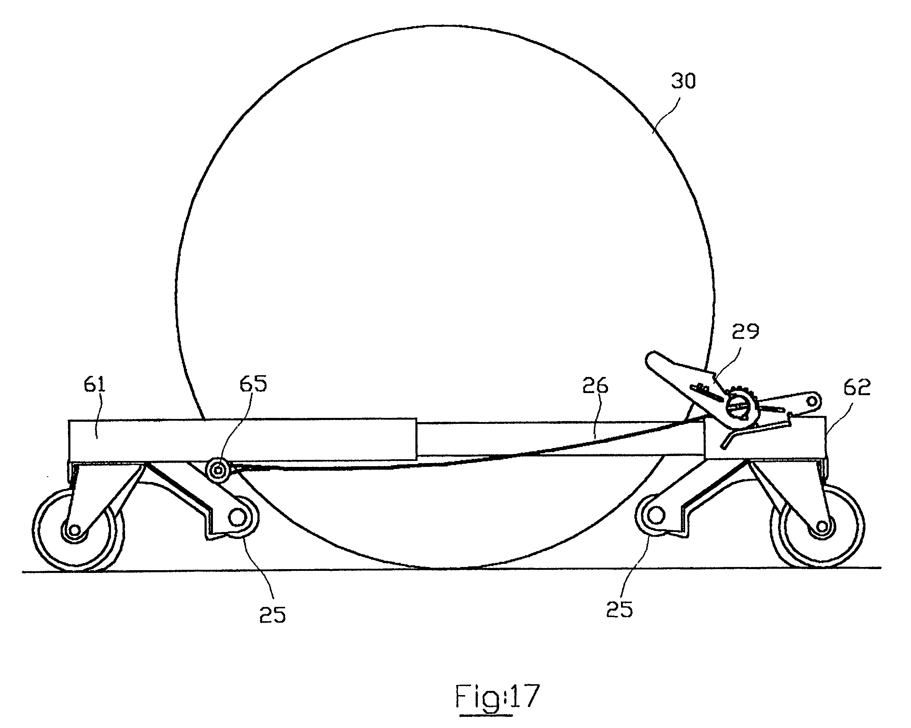

Dans les dessins joints à la présente description, les figures 1 et 2 présentent chacune une vue, de côté et de dessus respectivement, d'un chariot connu de l'état de la technique.

Ce chariot connu, qu'il soit de remorquage ou de manutention, comprend deux éléments télescopiques 1, 2, deux éléments de traverse (ou deux arbres) 3, 4 montés sur roulettes 5 et des moyens 6 de déplacement des deux éléments télescopiques l'un par rapport à l'autre. Chaque élément de traverse (ou chaque arbre) 3, 4 supporte au moins un rouleau 7 et est fixé, sensiblement perpendiculairement, sur l'extrémité libre de l'un des deux éléments télescopiques 1, 2.

Ce chariot connu peut prendre notamment une position de repos (fig.1) et une position de levage (non représentée). Dans la position de repos, les deux éléments télescopiques 1, 2 sont écartés l'un de l'autre, de façon que le chariot puisse être placé sous la roue (à lever) 8, avec les rouleaux 7 positionnés de part et d'autre de la roue. Dans la position de levage, les deux éléments télescopiques 1, 2 sont rapprochés l'un de l'autre, de façon que la roue 8 soit levée et supportée par les rouleaux 7.

Actuellement, les moyens 6 de déplacement des deux éléments télescopiques comprennent toujours une crémaillère 9 articulée grâce à un dispositif à cliquet 10. Plus précisément, l'un 2 des deux éléments télescopiques est une crémaillère 9 munie de crans destinés à coopérer avec un dispositif à cliquet 10 fixé sur l'autre 1 des deux éléments télescopiques. Ainsi, en actionnant la clé 11 du dispositif à cliquet 10, l'opérateur permet l'emboîtement horizontal des deux éléments télescopiques l'un dans l'autre, et donc le passage du chariot de la position de repos à la position de levage.

Dans le cas du remorquage, il est également connu de mettre en sécurité la roue sur le chariot. On utilise pour cela une sangle de sécurité 12, dont les deux extrémités sont fixées chacune à l'un des deux éléments de traverse (ou deux arbres) 3, solidaires des deux éléments télescopiques 1, 2. Cette sangle de sécurité 12 est mise en oeuvre de la façon suivante : après que le chariot a été amené en position de levage (non représentée), l'opérateur positionne la sangle de sécurité sur la périphérie de la roue ; puis l'opérateur met en tension la sangle de sécurité par actionnement d'un second dispositif à cliquet 13. Ainsi, la roue est maintenue et serrée contre le chariot par la sangle de sécurité.

Il apparaît que le mode de réalisation connu précité des moyens de déplacement des deux éléments télescopiques présente plusieurs inconvénients.

Tout d'abord, le poids du chariot est très élevé (environ 40 kg en général), du fait de l'utilisation d'une crémaillère. En effet, la crémaillère ainsi que l'autre élément télescopique doivent obligatoirement être lourds puisqu'ils doivent être suffisamment solides pour supporter au moins en partie le poids du véhicule à dépanner. Il est à noter que le poids élevé du chariot est dangereux pour la santé des opérateurs amenés à manipuler le chariot à de nombreuses reprises chaque jour. Ainsi, dans le cas du remorquage, lors de chaque intervention, l'opérateur doit porter deux chariots de son véhicule de dépannage jusqu'au véhicule à dépanner, puis glisser ces deux chariots chacun sous une des roues avant (ou arrière) du véhicule à dépanner.

En outre, le passage du chariot de la position de repos à la position de levage est une opération relativement longue et fatiguante. En effet, l'opérateur doit actionner à de multiples reprises la clé du dispositif à cliquet (selon un mouvement de pompage), jusqu'à ce que la roue du véhicule à dépanner soit suffisamment levée (en général 5 cm au-dessus du sol).

Il apparaît également que la mise en oeuvre de la sangle de sécurité (dans le cas du remorquage), telle qu'elle effectuée actuellement, n'est pas optimale. En effet, elle oblige l'opérateur à travailler en deux temps : il ne peut procéder à la mise en oeuvre de la sangle de sécurité qu'après avoir amené le chariot en position de levage. On comprend que dans le cas contraire, la sangle de sécurité, préalablement mise en tension, se détendrait lorsque les deux éléments télescopiques seraient rapprochés horizontalement l'un de l'autre, du fait que le mouvement d'élévation vers le haut de la roue est d'une amplitude plus faible que celle du mouvement de rapprochement horizontal. De plus, la mise en tension de la sangle de sécurité est elle-même une opération relativement fatiguante puisque l'opérateur doit actionner à de multiples reprises la clé du second dispositif à cliquet (selon un mouvement de pompage), jusqu'à ce que la sangle de sécurité soit suffisamment tendue.

Un chariot ayant les caractéristiques du préambule de la revendication 1 est décrit dans le document US-A-4 690 605.

L'invention a notamment pour objectif de pallier ces différents inconvénients de l'état de la technique.

Plus précisément, l'un des objectifs de la présente invention est de fournir un chariot, du type permettant de lever et supporter au moins une roue d'un véhicule, qui présente un poids beaucoup plus faible que le chariot connu de l'art antérieur (discuté ci-dessus en relation avec les figures 1 et 2).

L'invention a également pour objectif de fournir un tel chariot pouvant être amené simplement, rapidement et sans effort de la position de repos à la position de levage.

Un autre objectif de l'invention est de fournir un tel chariot permettant une mise en oeuvre de la sangle de sécurité (dans le cas du remorquage) plus aisée et plus rapide.

Un objectif complémentaire de l'invention est de fournir deux modes de réalisation d'un tel chariot, adaptés respectivement au remorquage et à la manutention.

Ces différents objectifs, ainsi que d'autres qui apparaîtront par la suite, sont atteints selon l'invention à l'aide d'un chariot, du type permettant de lever et supporter au moins une roue d'un véhicule, en vue de son remorquage et/ou de sa manutention, ledit chariot comprenant deux ensembles de support, montés sur roulettes et pourvus chacun d'au moins un rouleau, et des moyens de déplacement des deux ensembles de support l'un par rapport à l'autre, ledit chariot pouvant prendre notamment les deux positions suivantes
- une position de repos, dans laquelle les deux ensembles de support sont écartés l'un de l'autre, de façon que le chariot puisse être placé sous la roue, avec les rouleaux positionnés de part et d'autre de la roue,
- une position de levage, dans laquelle les deux ensembles de support sont rapprochés l'un de l'autre, de façon que la roue soit levée et supportée par les rouleaux,
caractérisé en ce que lesdits moyens de déplacement comprennent :
- une sangle de levage, présentant deux extrémités solidaires chacune de l'un des deux ensembles de support ;
- des moyens d'action sur ladite sangle de levage, de façon à induire le passage dudit chariot de la position de repos à la position de levage.

Il convient de préciser que par sangle, on entend ici tout type de sangle, que celle-ci soit simple ou multiple (par exemple, double sangle) et quel que soit le matériau dans lequel celle-ci est réalisée. Par sangle, on entend également tout type d'élément pouvant assurer une fonction identique à celle d'une sangle, tel que notamment une chaîne, un câble, ... (et ce quel que soit le matériau dans lequel cet élément est réalisé).

On précise également que par rouleau, on entend ici non seulement les rouleaux à proprement parler mais aussi les galets.

Le principe général de l'invention consiste donc à utiliser, comme moyens de déplacement, une sangle de levage et des moyens d'action sur celle-ci.

Ainsi, le chariot de l'invention est beaucoup plus léger que le chariot connu de l'art antérieur. En effet, les deux ensembles de support ne comprennent pas de crémaillère. Le gain en termes de poids peut par exemple atteindre environ 50 %, ce qui améliore considérablement les conditions de travail, notamment pour les opérateurs qui manoeuvrent quotidiennement ces chariots (par exemple dans le cadre des mises en fourrière).

Dans un premier mode de réalisation avantageux de l'invention, lesdits moyens d'action sur la sangle de levage comprennent un dispositif à excentrique, auquel est fixée l'une des deux extrémités de la sangle de levage, et qui est monté pivotant, autour d'un premier axe excentrique, sur l'un des deux ensembles de support, le passage du dispositif à excentrique dans une position excentrée permettant d'induire une traction sur la sangle de levage, supposée préalablement mise en tension, et en conséquence le passage du chariot dans la position de levage.

Ainsi, le chariot de l'invention peut être amené simplement, rapidement et sans effort de la position de repos à la position de levage. En effet, en un seul mouvement, l'opérateur fait passer le dispositif à excentrique dans la position excentrée (qui est une position stable), et donc amène le chariot dans la position de levage. On rappelle que dans l'art antérieur, pour déplacer la crémaillère, l'opérateur doit actionner à de multiples reprises (selon un mouvement de pompage) la clé d'un dispositif à cliquet.

Préférentiellement, dans le cas de ce premier mode de réalisation, lesdits moyens d'action sur la sangle de levage comprennent en outre des premiers moyens de mise en tension de la sangle de levage, permettant le rapprochement des deux ensembles de support l'un par rapport à l'autre, jusqu'à ce que les rouleaux soient en contact avec la roue, de part et d'autre de celle-ci.

Avantageusement, lesdits premiers moyens de mise en tension comprennent un tendeur à cliquet.

Ainsi, la sangle de levage est aisément mise en tension. Il est important de noter que, dans ce premier mode de réalisation, le tendeur à cliquet est utilisé pour tendre la sangle de levage. On rappelle que c'est le basculement du dispositif à excentrique dans sa position excentrée qui permet d'amener le chariot dans la position de levage et donc de lever la roue.

De façon préférentielle, ledit dispositif à excentrique comprend :
- un corps principal, qui est monté pivotant, autour dudit premier axe excentrique, sur l'un des deux ensembles de support ;
- un crochet, auquel est fixée l'une des deux extrémités de la sangle de levage et qui est monté pivotant, autour d'un second axe, sur une extrémité dudit corps principal, de façon que lorsque le dispositif à excentrique passe dans la position excentrée, ledit second axe passe au-delà dudit premier axe excentrique.

De façon avantageuse, ledit dispositif à excentrique comprend des moyens de coopération avec des moyens extérieurs d'actionnement.

Avantageusement, lesdits moyens de coopération comprennent un fourreau, et lesdits moyens extérieurs d'actionnement comprennent un timon dont une extrémité présente une forme lui permettant de s'engager dans ledit fourreau du dispositif à excentrique.

Ainsi, le timon offre un effet de bras de levier important, permettant à l'opérateur de basculer sans grand effort le dispositif à excentrique dans sa position excentrée.

Dans un second mode de réalisation de l'invention, lesdits moyens d'action sur la sangle de levage comprennent des premiers moyens de mise en tension de la sangle de levage, permettant le rapprochement des deux ensembles de support l'un par rapport à l'autre, d'abord jusqu'à ce que les rouleaux soient en contact avec la roue, de part et d'autre de celle-ci, puis jusqu'à ce que le rapprochement des rouleaux induise le passage dudit chariot dans ladite position de levage.

Avantageusement, dans le cas de ce second mode de réalisation, lesdits premiers moyens de mise en tension comprennent un tendeur à cliquet.

Il est important de noter que, dans ce second mode de réalisation, le tendeur à cliquet est utilisé non seulement pour tendre la sangle de levage (comme c'est le cas dans le premier mode de réalisation précité) mais aussi pour lever la roue. On comprend que ce second mode de réalisation est encore plus simple que le premier puisqu'il ne nécessite pas de dispositif à excentrique. En revanche, il ne peut s'appliquer que si le poids du véhicle à lever n'est pas trop élevé, puisque le couple d'effort fourni par un tendeur à cliquet est limité par rapport à celui fourni par un dispositif à excentrique.

Dans un premier mode de réalisation avantageux des deux ensembles de support, ceux-ci comprennent :
- deux bras, articulés ensemble et de façon pivotante, à leurs extrémités hautes, autour d'un troisième axe ;
- deux arbres supportant chacun au moins un rouleau, chaque arbre étant fixé, sensiblement perpendiculairement, sur l'extrémité basse de l'un des deux bras articulés.

Ainsi, contrairement au chariot connu de l'art antérieur, les deux ensembles de support ne sont pas, dans ce premier mode de réalisation, des éléments télescopiques s'emboîtant l'un dans l'autre mais deux bras articulés.

De par la structure en "V" inversé de l'articulation, c'est essentiellement la sangle de levage qui supporte les forces exercées par la roue (et donc au moins en partie le poids du véhicule). Par conséquent, les deux bras articulés peuvent offrir une résistance aux efforts moindre que les éléments télescopiques du chariot de l'art antérieur. Ces deux bras articulés peuvent donc être très légers (en étant creux par exemple). On peut ainsi envisager un chariot pesant environ 18 kg (au lieu de 40 kg environ pour le chariot de l'art antérieur).

Avantageusement, chaque rouleau tourne fou autour d'un quatrième axe, solidaire de l'un des arbres et placé entre les deux bras articulés, de façon que le rapprochement des deux bras articulés, par rotation autour dudit troisième axe, induise un mouvement de rotation vers le haut des quatrièmes axes, et donc des rouleaux.

De cette façon, les rouleaux présentent un mouvement de rotation vers le haut lorsqu'ils se rapprochent l'un de l'autre. Ceci permet de réduire la course nécessaire des bras jusqu'à la position de levage. On comprend en effet que cette course est réduite par rapport au cas classique où le mouvement de rapprochement des rouleaux est horizontal.

De façon avantageuse, les roulettes sur lesquelles sont montés les deux ensembles de support sont des roulettes fixes montées aux extrémités desdits arbres.

Ainsi, en utilisant deux chariots ce ce type (un sous chacune des roues avant ou arrière), il est possible de remorquer le véhicule sur une route, à une vitesse relativement élevée (par exemple 60 km/h).

Préférentiellement, ledit chariot comprend en outre :
- une sangle de sécurité, présentant deux extrémités solidaires chacune de l'un des deux arbres, ladite sangle de sécurité étant destinée à être positionnée sur la périphérie de la roue, après que les rouleaux ont été mis en contact avec la roue, de part et d'autre de celle-ci ;
- des seconds moyens de mise en tension de ladite sangle de sécurité, supposée préalablement positionnée sur la périphérie de la roue,
ladite sangle de sécurité ceinturant automatiquement la roue, par serrage, lorsque le chariot passe dans la position de levage, la roue s'élévant par rapport aux arbres auxquels sont fixées les extrémités de la sangle de sécurité.

De cette façon, la mise en oeuvre de la sangle de sécurité est plus aisée et plus rapide qu'auparavant. En effet, l'opérateur se contente de positionner la sangle de sécurité sur la périphérie de la roue et d'amener les rouleaux en contact avec la roue. Ensuite, c'est le mouvement d'élévation de la roue qui assure le serrage automatique de la sangle de sécurité contre la roue.

Ceci est possible du fait que les rouleaux se rapprochent l'un de l'autre dans un mouvement de rotation vers le haut, dont l'amplitude est supérieure à celle de la course horizontale des extrémités de la sangle de sécurité. En d'autres termes, contrairement à ce qui se passe avec le chariot de l'art antérieur, la sangle de sécurité, préalablement mise en tension, ne se détend pas (au contraire, elle serre de plus en plus la roue) lorsque les deux ensembles de support sont rapprochés l'un de l'autre.

Avantageusement, lesdits seconds moyens de mise en tension comprennent une came à griffe, permettant le réglage en longueur de la sangle de sécurité. Il est clair cependant que tout autre système de tension peut convenir, tel que notamment un enrouleur automatique de sangle avec déblocage manuel.

Dans un second mode de réalisation avantageux des deux ensembles de support, ceux-ci comprennent :
- deux éléments télescopiques ;
- deux éléments de traverse, supportant chacun au moins un rouleau, chaque élément de traverse étant fixé, sensiblement perpendiculairement, sur l'extrémité libre de l'un des deux éléments télescopiques.

Ainsi, comme dans le chariot connu de l'art antérieur, les deux ensembles de support sont, dans ce second mode de réalisation, des éléments télescopiques s'emboîtant l'un dans l'autre.

Si ces éléments télescopiques doivent être plus résistants que les deux bras articulés du premier mode de réalisation de l'invention, ils peuvent néanmoins offrir une résistance aux efforts moindre que les éléments télescopiques du chariot de l'art antérieur, du fait que la sangle de levage supporte en partie les forces exercées par la roue (et le véhicule). Par conséquent, les éléments télescopiques du second mode de réalisation de l'invention peuvent être plus légers (en étant creux par exemple) que les éléments télescopiques du chariot de l'art antérieur.

De façon avantageuse, les roulettes sur lesquelles sont montés les deux ensembles de support sont des roulettes pivotantes montées sous les éléments de traverse.

Ainsi, en utilisant plusieurs chariots ce ce type, on peut procéder non pas au remorquage mais à la manutention du véhicule, par exemple dans un garage ou dans un parking. Avec un chariot placé sous chacune des roues arrière (ou avant respectivement), on peut déplacer le véhicule en le levant par les roues avant (ou arrière respectivement), grâce à un bras de levage ou une grue. On peut également placer un chariot sous chacune des quatre roues, de façon à pouvoir déplacer le véhicule en rotation sur lui-même.

Préférentiellement, il est prévu des moyens de verrouillage dudit chariot dans la position de levage.

Ainsi, au cours du transport ou de la manutention, on peut verrouiller le chariot par sécurité. Ceci permet d'éviter que les deux ensembles de support ne s'écartent l'un de l'autre, et donc que la roue du véhicule dépanné ne soit plus (ou moins) levée et vienne en contact avec le sol.

D'autres caractéristiques et avantages de l'invention apparaîtront à la lecture de la description suivante de deux modes de réalisation préférentiels de l'invention, donnés à titre d'exemple indicatif et non limitatif, et des dessins annexés, dans lesquels :
- chacune des figures 1 et 2 présente une vue, de côté et de dessus respectivement, d'un chariot connu de l'art antérieur, en position de repos;
- la figure 3 présente une vue de côté d'un véhicule de dépannage remorquant une automobile par levage des roues avant, chacune des roues arrière étant levée et supportée grâce à un chariot selon l'invention ;
- les figures 4 et 5 présentent chacune une vue, en perspective et de dessus respectivement, d'un premier mode de réalisation du chariot selon l'invention ;
- chacune des figures 6, 7 et 8 présente une vue de côté du chariot des figures 4 et 5, en positions de repos, intermédiaire et de levage respectivement ;
- la figure 9 présente en détail le fonctionnement du dispositif à excentrique compris dans le chariot selon l'invention ;
- chacune des figures 10 et 11 présente une vue de côté (du côté opposé à celui des vues des figures 7 et 8) du chariot des figures 4 et 5, en positions intermédiaire et de levage respectivement, montrant en outre la mise en oeuvre d'une sangle de sécurité ;
- la figure 12 présente une vue en perspective d'un second mode de réalisation du chariot selon l'invention ;
- chacune des figures 13 et 14 présente une vue de côté du chariot de la figure 12, en positions de repos et de levage respectivement ;
- les figures 15 et 16 présentent chacune une vue, en perspective et de dessus respectivement, d'un troisième mode de réalisation du chariot selon l'invention ;
- chacune des figures 17 et 18 présente une vue de côté du chariot des figures 15 et 16, en positions de repos et de levage respectivement ; et
- chacune des figures 19 et 20 permet d'expliciter un mode de réalisation distinct de moyens de verrouillage dont peut être pourvu le chariot de l'invention.

L'invention concerne donc un chariot, du type permettant de lever et supporter au moins une roue d'un véhicule, en vue de son remorquage et/ou de sa manutention.

Les figures 1 et 2, qui présentent un chariot connu de l'art antérieur, ont déjà été discutées ci-dessus.

Ci-dessous, on présente successivement trois modes de réalisation du chariot selon l'invention, en relation avec les figures 1 à 11, 12 à 14, et 15 à 18 respectivement.

Dans le premier mode de réalisation (figures 1 à 11), le chariot de l'invention est destiné essentiellement au remorquage. Il est donc appelé "chariot de remorquage" dans la suite de la description.

La figure 3 présente un exemple d'utilisation de chariots de remorquage 14 selon l'invention. Un véhicule de dépannage 15 remorque une automobile 16 par levage des roues avant, grâce à un dispositif de levage et de remorquage constitué classiquement d'un bras de levage coudé 17, d'une flèche 18 et d'un berceau 19. Chacune des roues arrière est par ailleurs levée et supportée grâce à un chariot de remorquage 14 selon l'invention.

Il est clair que les chariots de remorquage de l'invention peuvent également être utilisés pour lever et supporter les roues avant d'une automobile, lorsque le véhicule de dépannage remorque celle-ci par levage des roues arrière.

Il est clair également que le chariot de remorquage de l'invention n'est lié en aucune façon au type de dispositif de levage et de remorquage monté à l'arrière du véhicule de dépannage 15.

En relation avec les figures 4 et 5, on présente maintenant un mode de réalisation préférentiel du chariot de remorquage selon l'invention.

De façon classique, le chariot comprend deux ensembles de support 21, 22 et des moyens 23 de déplacement de ces deux ensembles de support 21, 22 l'un par rapport à l'autre. Chaque ensemble de support 21, 22 est monté sur roulettes 24 et pourvu d'au moins un rouleau 25 sur lequel la roue à lever va reposer.

Dans le premier mode de réalisation de l'invention, les moyens 23 de déplacement comprennent une sangle de levage 26, un dispositif à excentrique 27 et des premiers moyens 29 de mise en tension de la sangle de levage 26.

La sangle de levage 26 est solidarisée à chacune de ses deux extrémités à l'un des deux ensembles de support 21, 22.

L'une des deux extrémités de la sangle de levage 26 est fixée au dispositif à excentrique 27. Par ailleurs, le dispositif à excentrique 27 est monté pivotant, autour d'un premier axe excentrique 28, sur l'un 21 des deux ensembles de support. Le passage du dispositif à excentrique dans une position excentrée permet d'induire une traction sur la sangle de levage 26, supposée préalablement mise en tension, et en conséquence le passage du chariot dans la position de levage.

Les premiers moyens 29 de mise en tension de la sangle de levage 26 permettent le rapprochement des deux ensembles de support 21, 22 l'un par rapport à l'autre, jusqu'à ce que les rouleaux 25 soient en contact avec la roue 30, de part et d'autre de celle-ci. Ces premiers moyens 29 de mise en tension sont par exemple constitués par un tendeur à cliquet. La sangle de levage 26 est alors fixée, à l'une de ses extrémités, sur le mandrin 48 du tendeur à cliquet 29.

Le dispositif à excentrique 27 comprend lui-même un corps principal 31, un crochet 32 et des moyens 34 de coopération avec des moyens 35 extérieurs d'actionnement.

Le corps principal 31 est monté pivotant, autour du premier axe excentrique 28, sur l'un 21 des deux ensembles de support .

L'une des deux extrémités de la sangle de levage 26 est fixée au crochet 32. Ce crochet 32 est par ailleurs monté pivotant, autour d'un second axe 33, sur une extrémité du corps principal 31, de façon que, lorsque le dispositif à excentrique 27 passe dans la position excentrée, le second axe 33 passe au-delà du premier axe excentrique 28. Le dispositif à excentrique vient alors en appui contre une butée 57, elle-même solidaire de l'ensemble de support sur lequel le dispositif à excentrique est monté pivotant.

Les moyens 34 de coopération sont par exemple constitués par un fourreau, et les moyens 35 extérieurs d'actionnement par un timon dont une extrémité présente une forme, par exemple un fer plat 36, lui permettant de s'engager dans le fourreau 34 du dispositif à excentrique.

Selon la présente invention, dans ce premier mode de réalisation (chariot de remorquage), les deux ensembles de support 21, 22 comprennent :
- deux bras 37, 38, articulés ensemble et de façon pivotante, à leurs extrémités hautes 39, 40, autour d'un troisième axe (central) 41 ;
- deux arbres 42, 43 supportant chacun au moins un des rouleaux 25, chaque arbre étant fixé, sensiblement perpendiculairement, sur l'extrémité basse 44, 45 de l'un des deux bras articulés 37, 38.

Chaque rouleau 25 tourne fou autour d'un quatrième axe 46. Chaque quatrième axe 46 est solidaire de l'un des arbres 42, 43 (via une patte de support 47) et placé entre les deux bras articulés 37, 38. Ainsi, le rapprochement des deux bras articulés 37, 38, par rotation autour du troisième axe 41, induit un mouvement de rotation vers le haut des quatrièmes axes 46, et donc des rouleaux 25. On notera que le tendeur à cliquet 29 (permettant la mise en tension de la sangle de levage 26) est par exemple monté articulé à l'extrémité de l'un de ces quatrièmes axes 46.

Les roulettes 24 sur lesquelles sont montés les deux ensembles de support 21, 22 sont par exemple des roulettes fixes, montées aux extrémités des arbres 42, 43.

Comme présenté sur les figures 4 et 5, le chariot de remorquage de l'invention peut également être muni d'une sangle de sécurité 49, présentant deux extrémités chacune solidaire de l'un des deux arbres 42, 43 (via un axe 52 fixé sur une patte de support 53 elle-même fixée sur un des arbres 42, 43), ainsi que de seconds moyens 50 de mise en tension de la sangle de sécurité (après que celle-ci a été préalablement positionnée sur la périphérie de la roue). Les seconds moyens de mise en tension, qui permettent le réglage de la longueur de la sangle de sécurité, sont par exemple constitués par une came à griffe. La sangle de sécurité 49 est pourvue de crampons 51 destinés à éviter le glissement de la sangle de sécurité sur le pneumatique de la roue.

L'utilisation et la mise en oeuvre de cette sangle de sécurité 49 est précisée par la suite, en relation avec les figures 10 et 11.

On présente maintenant, en relation avec les figures 6 à 9, le fonctionnement du chariot de remorquage des figures 4 et 5.

Tout d'abord, il convient de positionner le chariot sous la roue. Pour cela, le chariot est placé dans une position de repos (cf figure 6), dans laquelle la sangle de levage 26 est relâchée de façon que les deux bras articulés 37, 38 puissent être écartés l'un de l'autre. Ainsi, le chariot peut être placé sous la roue à lever 30, avec les rouleaux 25 touchant le sol et positionnés de part et d'autre de la roue 30.

Il est clair que le chariot de remorquage de l'invention peut être utilisé avec des roues 30, 30' de différents diamètres. En effet, comme présenté sur la figure 6, seul importe le fait que le chariot (supposé en position de repos) puisse être glissé sous la roue avec les rouleaux 25 positionnés de part et d'autre de celle-ci.

Ensuite, en manoeuvrant le tendeur à cliquet 29, l'opérateur tend la sangle de levage 26, de façon à rapprocher les deux bras articulés 37, 38, et ce jusqu'à ce que les rouleaux 25 soient en contact avec la roue, de part et d'autre de celle-ci. On notera que les rouleaux 25 effectuent un mouvement de rotation vers le haut, comme indiqué par les flèches référencées 54 sur la figure 6. Le chariot arrive alors en position intermédiaire (cf figure 7), ou position de pré-réglage (puisque la position des rouleaux 25 est pré-réglée par rapport au diamètre de la roue à soulever). On comprend que plus le diamètre de la roue 30 est grand, plus la mise en tension de la sangle de levage 26 est rapide. En effet, les rouleaux 25 arrivent plus rapidement au contact de la roue.

Enfin, en imprimant un mouvement en arc de cercle (mouvement référencé 55 sur les figures 7 et 8) au timon 35, qui est engagé par le fer plat 36 dans le fourreau 34 du dispositif à excentrique 27 (cf figure 7), l'opérateur fait pivoter le dispositif à excentrique 27 autour du premier axe excentrique 28 (mouvement référencé 56 sur la figure 7), jusqu'à sa position excentrée, en appui contre la butée 57. Ceci se traduit par un couple d'effort important sur le crochet 32, et une traction sur la sangle de levage 26, provoquant le rapprochement des deux bras articulés 37, 38 et donc des rouleaux 25. Le chariot arrive alors en position de levage (cf figure 8), dans laquelle la roue est levée et supportée par les rouleaux 25.

La figure 9 présente en détail le mouvement du dispositif à excentrique 27 et de la sangle de levage 26 solidaire de celui-ci via le crochet 32. Les différents éléments sont représentés en traits continus lorsque le chariot est dans la position intermédiaire (cf figure 7) et en traits pointillés lorsque le chariot est dans la position de levage (cf figure 8). On a également représenté la course de levage A de la sangle de levage 26, lorsque le chariot passe de la position intermédiaire à la position de levage.

On présente maintenant, en relation avec les figures 10 et 11, l'utilisation et la mise en oeuvre de la sangle de sécurité 49.

Lorsque le chariot est en position intermédiaire (cf figures 7 et 10), c'est-à-dire avant l'opération d'élévation, l'opérateur positionne la sangle de sécurité 49 sur la périphérie de la roue 30, en réglant la longueur de cette sangle de sécurité 49 grâce à la came à griffe 50.

Lors du passage à la position de levage (telle que présentée sur les figures 8 et 11), la roue 30 s'élève par rapport aux arbres auxquels sont fixées les extrémités de la sangle de sécurité 49. Du fait du mouvement de rotation vers le haut des rouleaux 25 (cf flèches référencées 54 sur la figure 6), l'amplitude de l'élévation de la roue est supérieure à celle du rapprochement horizontal des deux extrémités de la sangle de sécurité 49. Par conséquent, la roue 30 est automatiquement serrée contre la sangle de sécurité 49 (cette dernière étant tendue). Par ce serrage, la sangle de sécurité 49 maintient parfaitement la roue sur le chariot en exerçant une pression sur les patins antidérapants 51. En outre, du fait du rapprochement horizontal de ses deux extrémités, la sangle de sécurité 49 ceinture la roue 30.

Dans le second mode de réalisation (figures 12 à 14), le chariot de l'invention est destiné essentiellement à la manutention. Il est donc appelé "chariot de manutention" dans la suite de la description.

Dans la suite de la description, on conserve les mêmes références numériques que celles utilisées ci-dessus pour tous les éléments communs aux deux modes de réalisation.

Classiquement, et de même que le chariot de remorquage présenté ci-dessus, le chariot de manutention de l'invention comprend deux ensembles de support 58, 59 et des moyens 23 de déplacement de ces deux ensembles de support 58, 59 l'un par rapport à l'autre. Chaque ensemble de support 58, 59 est monté sur roulettes 60 et pourvu d'au moins un rouleau 25 sur lequel la roue à lever va reposer.

De même que dans le premier mode de réalisation, les moyens 23 de déplacement des ensembles de support comprennent une sangle de levage 26, un dispositif à excentrique 27 et des premiers moyens 29 de mise en tension de la sangle de levage 26.

En revanche, le chariot de manutention se distingue du chariot de remorquage présenté ci-dessus essentiellement en ce que ses deux ensembles de support 58, 59 comprennent deux éléments télescopiques 61, 62 et deux éléments de traverse 63, 64. Chaque élément de traverse 63, 64 supporte au moins un rouleau 25 et est fixé, sensiblement perpendiculairement, sur l'extrémité libre de l'un des deux éléments télescopiques 61, 62. En outre, les roulettes 60 sur lesquelles sont montés les deux ensembles de support 58, 59 sont par exemple des roulettes pivotantes (au lieu de fixes), montées sous les éléments de traverse 63, 64.

Le fonctionnement du chariot de manutention est identique à celui du chariot de remorquage.

Ainsi, comme présenté sur la figure 13, le chariot de manutention est d'abord placé dans une position de repos, de façon à pouvoir être positionné sous la roue à lever 30, avec les rouleaux 25 touchant le sol et positionnés de part et d'autre de la roue 30.

Ensuite, en manoeuvrant le tendeur à cliquet 29, l'opérateur tend la sangle de levage 26, de façon à rapprocher les deux éléments télescopiques 61, 62 (qui s'emboîtent l'un dans l'autre), et ce jusqu'à ce que les rouleaux 25 soient en contact avec la roue 30, de part et d'autre de celle-ci. Le chariot arrive alors en position intermédiaire (non représentée).

Enfin, en imprimant un mouvement en arc de cercle (mouvement référencé 55 sur la figure 13) au timon 35, qui est engagé par le fer plat 36 dans le fourreau 34 du dispositif à excentrique 27, l'opérateur exerce, via le dispositif à excentrique 27, une traction sur la sangle de levage 26, provoquant l'emboîtement des deux éléments télescopiques 61, 62 et donc le rapprochement horizontal des rouleaux 25. Le chariot arrive alors en position de levage (cf figure 14), dans laquelle la roue 30 est levée et supportée par les rouleaux 25.

Dans le troisième mode de réalisation (figures 15 et 16), le chariot est du type "manutention", comme dans le second mode de réalisation. Dans la suite de la description, pour tous les éléments communs aux second et troisième modes de réalisation, on utilise des références numériques identiques.

Le troisième mode de réalisation se distingue du second présenté ci-dessus essentiellement en ce qu'il ne comprend pas de dispositif à excentrique. En d'autres termes, les moyens 23 de déplacement des ensembles de support comprennent une sangle de levage 26 et des premiers moyens 29 de mise en tension de la sangle de levage 26.

Ces premiers moyens 29 de mise en tension sont par exemple constitués par un tendeur à cliquet fixé sur l'un des deux éléments télescopiques (celui de droite 62 dans l'exemple présenté). La sangle de levage 26 est alors fixée, à l'une de ses extrémités, sur le mandrin 48 du tendeur à cliquet 29, et, à l'autre de ses extrémités, à un axe de support 65 solidaire de l'autre des deux éléments télescopiques (celui de gauche 61 dans l'exemple présenté).

On présente maintenant le fonctionnement de ce chariot de manutention.

Comme présenté sur la figure 1, il est d'abord placé dans une position de repos, de façon à pouvoir être positionné sous la roue à lever 30, avec les rouleaux 25 touchant le sol et positionnés de part et d'autre de la roue 30.

Ensuite, en manoeuvrant le tendeur à cliquet 29, l'opérateur tend la sangle de levage 26, de façon à rapprocher les deux éléments télescopiques 61, 62 (qui s'emboîtent l'un dans l'autre), et ce jusqu'à ce que les rouleaux 25 soient en contact avec la roue 30, de part et d'autre de celle-ci. Le chariot arrive alors en position intermédiaire (non représentée).

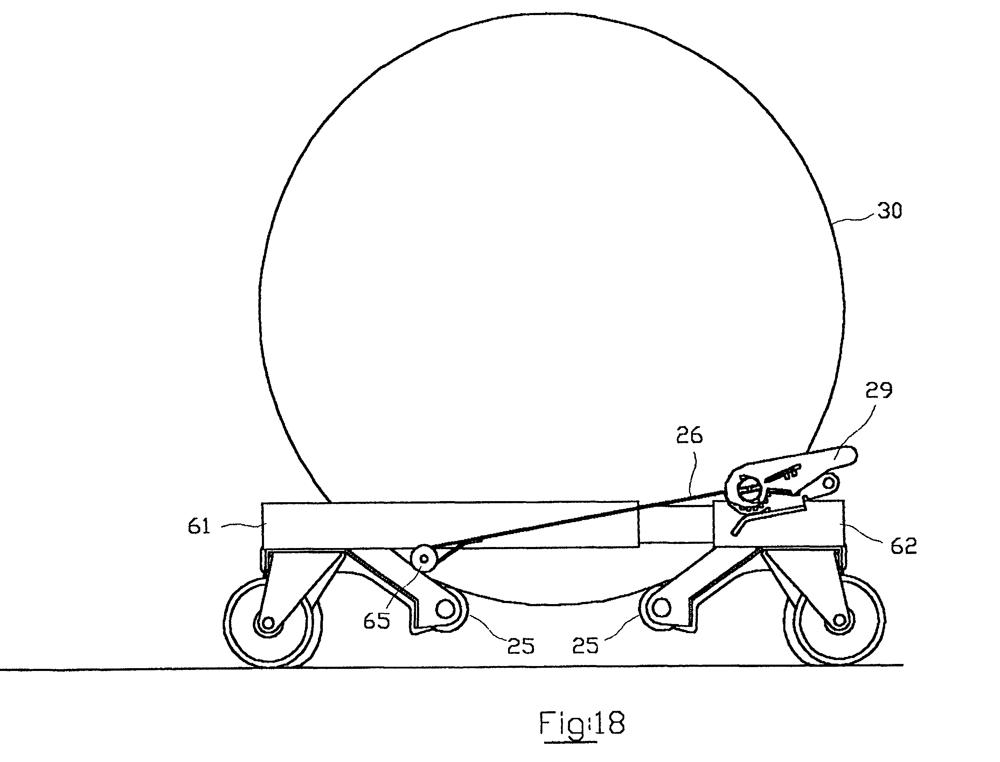

Enfin, toujours en manoeuvrant le tendeur à cliquet 29, l'opérateur réduit la longueur de sangle de levage 26 entre l'axe de support 65 et le tendeur à cliquet 29. En fait, lorsque l'opérateur actionne la poignée du tendeur à cliquet, la sangle de levage 26 s'enroule autour de l'axe formant mandrin 48. Ceci provoque un rapprochement (toujours par emboîtement) encore plus grand des deux éléments télescopiques 61, 62 et donc le rapprochement horizontal des rouleaux 25. Le chariot arrive alors en position de levage (cf figure 18), dans laquelle la roue 30 est levée et supportée par les rouleaux 25.

Il est à noter que pour dégager une roue portée par le chariot en position de levage, il suffit d'ouvrir totalement le tendeur à cliquet 29 (avec le système de débrayage manuel dont il est pourvu, de façon classique), la sangle 26 se déroulant alors par l'intermédiaire du mandrin 48 autorisant les deux éléments de support de s'écarter pour permettre à la roue de descendre au sol.

On notera également qu'afin d'augmenter l'effet de bras de levier, le tendeur à cliquet 29 peut être du type actionné par un levier externe au lieu d'une poignée incorporée (comme présenté sur les figures).

Il est clair que la variante consistant à utiliser uniquement un tendeur à cliquet, sans dispositif à excentrique, s'applique également au chariot de remorquage. Cette autre application se déduit aisément de celle présentée ci-dessus en relation avec les figures 15 à 18 et ne sera donc pas décrite ici plus en détail.

Optionnellement, le chariot de l'invention peut comprendre des moyens de verrouillage du chariot dans la position de levage, de façon à éviter, notamment lors du transport ou de la manutention, que les deux ensembles de support s'écartent l'un de l'autre et n'assurent plus correctement leur rôle de levage de la roue.

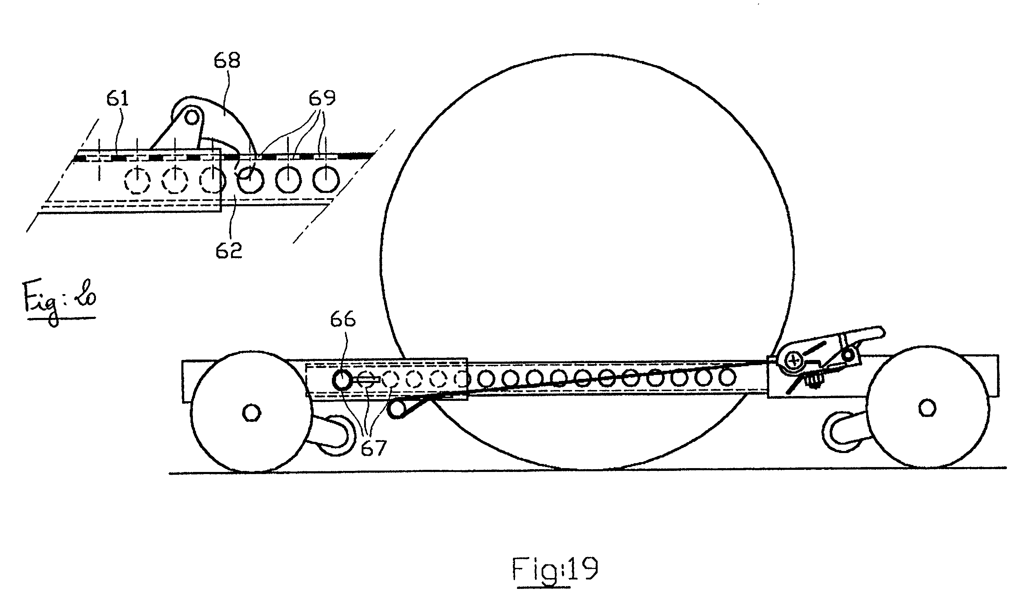

Dans la suite de la description, on présente deux modes de réalisation de ces moyens de verrouillage, en relation avec les figures 19 (et 16) et 20 respectivement, avec un chariot selon le troisième mode de réalisation (c'est-à-dire un chariot de manutention, sans dispositif à excentrique). Il est clair cependant que quel que soit le mode de réalisation du chariot de l'invention, celui-ci peut être muni de moyens de verrouillage.

Dans leur premier mode de réalisation (cf fig.16 et 19), les moyens de verrouillage comprennent un verrou à ressort 66 fixé au tube télescopique femelle 61 et destiné à se cheviller latéralement dans l'une des ouvertures 67 prévues à cet effet sur une des parois latérales du tube télescopique mâle 62.

Dans leur second mode de réalisation (cf vue de côté de la figure 20), les moyens de verrouillage comprennent un crochet 68 fixé au tube télescopique femelle 61 et destiné à pénétrer dans l'une des ouvertures 69 prévues à cet effet sur la paroi supérieure du tube télescopique mâle 62.

## Revendications

1. Chariot, du type permettant de lever et supporter au moins une roue (30) d'un véhicule (16), en vue de son remorquage et/ou de sa manutention, ledit chariot comprenant deux ensembles de support, montés sur roulettes (24 ; 60) et pourvus chacun d'au moins un rouleau (25), et des moyens de déplacement des deux ensembles de support l'un par rapport à l'autre, ledit chariot pouvant prendre notamment les deux positions suivantes :
- une position de repos, dans laquelle les deux ensembles de support sont écartés l'un de l'autre, de façon que le chariot puisse être placé sous la roue, avec les rouleaux positionnés de part et d'autre de la roue,
- une position de levage, dans laquelle les deux ensembles de support sont rapprochés l'un de l'autre, de façon que la roue soit levée et supportée par les rouleaux,
**caractérisé en ce que** lesdits moyens (23) de déplacement comprennent :
- une sangle de levage (26), présentant deux extrémités solidaires chacune de l'un des deux ensembles de support (21, 22 ; 58, 59) ;
- des moyens (27, 29) d'action sur ladite sangle de levage (26), de façon à induire le passage dudit chariot de la position de repos à la position de levage.

2. Chariot selon la revendication 1, **caractérisé en ce que** lesdits moyens d'action sur la sangle de levage comprennent un dispositif à excentrique (27), auquel est fixée l'une des deux extrémités de la sangle de levage, et qui est monté pivotant, autour d'un premier axe excentrique (28), sur l'un des deux ensembles de support, le passage du dispositif à excentrique dans une position excentrée permettant d'induire une traction sur la sangle de levage, supposée préalablement mise en tension, et en conséquence le passage du chariot dans la position de levage.

3. Chariot selon la revendication 2, **caractérisé en ce que** lesdits moyens d'action sur la sangle de levage comprennent en outre des premiers moyens (29) de mise en tension de la sangle de levage, permettant le rapprochement des deux ensembles de support l'un par rapport à l'autre, jusqu'à ce que les rouleaux soient en contact avec la roue, de part et d'autre de celle-ci.

4. Chariot selon la revendication 3, **caractérisé en ce que** lesdits premiers moyens (29) de mise en tension comprennent un tendeur à cliquet.

5. Chariot selon l'une quelconque des revendications 2 à 4, **caractérisé en ce que** ledit dispositif à excentrique (27) comprend:
- un corps principal (31), qui est monté pivotant, autour dudit premier axe excentrique, sur l'un des deux ensembles de support ;
- un crochet (32), auquel est fixée l'une des deux extrémités de la sangle de levage et qui est monté pivotant, autour d'un second axe, sur une extrémité dudit corps principal, de façon que lorsque le dispositif à excentrique passe dans la position excentrée, ledit second axe passe au-delà dudit premier axe excentrique.

6. Chariot selon l'une quelconque des revendications 2 à 5, **caractérisé en ce que** ledit dispositif à excentrique (27) comprend des moyens (34) de coopération avec des moyens (35) extérieurs d'actionnement.

7. Chariot selon la revendication 6, **caractérisé en ce que** lesdits moyens (34) de coopération comprennent un fourreau,
et **en ce que** lesdits moyens (35) extérieurs d'actionnement comprennent un timon dont une extrémité (36) présente une forme lui permettant de s'engager dans ledit fourreau du dispositif à excentrique.

8. Chariot selon la revendication 1, **caractérisé en ce que** lesdits moyens d'action sur la sangle de levage comprennent des premiers moyens (29) de mise en tension de la sangle de levage, permettant le rapprochement des deux ensembles de support l'un par rapport à l'autre, d'abord jusqu'à ce que les rouleaux soient en contact avec la roue, de part et d'autre de celle-ci, puis jusqu'à ce que le rapprochement des rouleaux induise le passage dudit chariot dans ladite position de levage.

9. Chariot selon la revendication 8, **caractérisé en ce que** lesdits premiers moyens (29) de mise en tension comprennent un tendeur à cliquet.

10. Chariot selon l'une quelconque des revendications 1 à 9, **caractérisé en ce que** lesdits deux ensembles de support (21, 22) comprennent :
- deux bras (37, 38), articulés ensemble et de façon pivotante, à leurs extrémités hautes, autour d'un troisième axe (41) ;
- deux arbres (42, 43) supportant chacun au moins un rouleau (25), chaque arbre étant fixé, sensiblement perpendiculairement, sur l'extrémité basse de l'un des deux bras articulés.

11. Chariot selon la revendication 10, **caractérisé en ce que** chaque rouleau (25) tourne fou autour d'un quatrième axe (46), solidaire de l'un des arbres (42, 43) et placé entre les deux bras articulés (37, 38), de façon que le rapprochement des deux bras articulés, par rotation autour dudit troisième axe, induise un mouvement de rotation vers le haut des quatrièmes axes, et donc des rouleaux.

12. Chariot selon l'une quelconque des revendications 10 et 11, **caractérisé en ce que** les roulettes (24) sur lesquelles sont montés les deux ensembles de support (21, 22) sont des roulettes fixes montées aux extrémités desdits arbres.

13. Chariot selon l'une quelconque des revendications 11 et 12, **caractérisé en ce qu'**il comprend en outre :
- une sangle de sécurité (49), présentant deux extrémités solidaires chacune de l'un des deux arbres (42, 43), ladite sangle de sécurité étant destinée à être positionnée sur la périphérie de la roue (30), après que les rouleaux (25) ont été mis en contact avec la roue, de part et d'autre de celle-ci ;
- des seconds moyens (50) de mise en tension de ladite sangle de sécurité, supposée préalablement positionnée sur la périphérie de la roue,
ladite sangle de sécurité (49) ceinturant automatiquement la roue, par serrage, lorsque le chariot passe dans la position de levage, la roue s'élévant par rapport aux arbres auxquels sont fixées les extrémités de la sangle de sécurité.

14. Chariot selon la revendication 13, **caractérisé en ce que** lesdits seconds moyens (50) de mise en tension comprennent une came à griffe.

15. Chariot selon l'une quelconque des revendications 1 à 9, **caractérisé en ce que** lesdits deux ensembles de support (58, 59) comprennent :
- deux éléments télescopiques (61, 62) ;
- deux éléments de traverse (63, 64), supportant chacun au moins un rouleau (25), chaque élément de traverse étant fixé, sensiblement perpendiculairement, sur l'extrémité libre de l'un des deux éléments télescopiques.

16. Chariot selon la revendication 15, **caractérisé en ce que** les roulettes (60) sur lesquelles sont montés les deux ensembles de support sont des roulettes pivotantes montées sous les éléments de traverse (63, 64).

17. Chariot selon l'une quelconque des revendications 1 à 16, **caractérisé en ce qu'**il comprend des moyens (66, 67 ; 68, 69) de verrouillage dudit chariot dans la position de levage.

## Patentansprüche

1. Wagen zum Anheben und Tragen von mindestens einem Rad (30) eines Fahrzeugs (16) zum Zweck des Abschleppens oder der Wartung, wobei der Wagen zwei auf Rollen (24; 60) montierte Tragevorrichtungen aufweist, die jeweils mindestens über eine Walze (25) sowie über Mittel zum Bewegen der zwei Tragevorrichtungen gegeneinander verfügen und wobei der Wagen insbesondere die zwei folgenden Stellungen einnehmen kann:
- eine Ruhestellung, in der die zwei Tragevorrichtungen auseinander liegen, um das Schieben der Wagens unter das Fahrzeugrad zu ermöglichen, wobei die Walzen auf beiden Seiten des Rades liegen,
- eine Hebestellung, wobei die zwei Tragevorrichtungen dicht aneinander liegen, so dass das Fahrzeugrad angehoben und von Rollen getragen wird,
**dadurch gekennzeichnet, dass** die Bewegungsmittel (23) folgendes aufweisen:
- einen Heberiemen (26), dessen zwei Enden jeweils mit einer der Tragevorrichtungen verbunden sind (21, 22; 58, 59);
- Mittel (27, 29) zum Einwirken auf den Heberiemen (26), um den Übergang des Wagens von der Ruhestellung in die Hebestellung zu bewirken.

2. Wagen nach Anspruch 1, **dadurch gekennzeichnet, dass** die Mittel zum Einwirken auf den Heberiemen eine Exzentervorrichtung (27) aufweisen, an die ein Ende des Heberiemens befestigt ist, wobei die Exzentervorrichtung drehbar um eine erste Exzenterachse (28) an einer der Tragevorrichtungen angebracht ist, so dass der Übergang der Exzentervorrichtung in eine exzentrische Stellung das Einwirken einer Zugkraft auf den vorher vermeintlich gespannten Heberiemen bewirkt, so dass der Wagen in die Hebestellung übergeht.

3. Wagen nach Anspruch 2, **dadurch gekennzeichnet, dass** die Mittel zum Einwirken auf den Heberiemen ferner über einen ersten Spannmechanismus (29) des Heberiemens verfügen, um die gegenseitige Annäherung der zwei Tragevorrichtungen zu ermöglichen, so dass die Walzen beidseitig das Fahrzeugrad berühren.

4. Wagen nach Anspruch 3, **dadurch gekennzeichnet, dass** der erste Spannmechanismus (29) über eine Ratschenbetätigung verfügt.

5. Wagen nach einem der Ansprüche 2 bis 4, **dadurch gekennzeichnet, dass** die Exzentervorrichtung (27) folgendes aufweist:
- einen Hauptkörper (31), der drehbar um die erste exzentrische Achse auf einer der zwei Tragevorrichtungen angebracht ist;
- einen Haken (32), an dem ein Ende des Heberiemens befestigt ist und der drehbar um eine zweite Achse an einem Ende des Hauptkörpers angebracht ist, derart, dass wenn die Exzentervorrichtung in die exzentrische Lage übergeht, die zweite Achse über die erste exzentrische Achse hinausläuft.

6. Wagen nach einem der Ansprüche 2 bis 5, **dadurch gekennzeichnet, dass** die Exzentervorrichtung (27) Mittel (34) aufweist, die mit den äußeren Betätigungsmitteln (35) zusammenwirken.

7. Wagen nach Anspruch 6, **dadurch gekennzeichnet, dass** die Mittel zum Zusammenwirken (34) eine Hülse aufweisen und,
dass die äußeren Betätigungsmittel (35) eine Deichsel aufweisen, von der ein Ende (36) eine Form aufweist, die das Einführen in die Einsteckhülse der Exzentervorrichtung ermöglicht.

8. Wagen nach Anspruch 1, **dadurch gekennzeichnet, dass** die Mittel zum Einwirken auf den Heberiemen einen ersten Spannmechanismus (29) für den Riemens aufweisen, der das gegenseitige Näherrücken der zwei Tragevorrichtungen ermöglicht, zuerst bis die Walzen das Fahrzeugrad auf beiden Seiten berühren und dann bis die Annäherung der Walzen zum Übergang des Wagens in die Hebestellung führt.

9. Wagen nach Anspruch 8, **dadurch gekennzeichnet, dass** der erste Spannmechanismus (29) eine Ratschenbetätigung aufweist.

10. Wagen nach einem der Ansprüche 1 bis 9, **dadurch gekennzeichnet, dass** die zwei Tragevorrichtungen (21, 22) folgendes aufweisen:
- zwei Arme (37, 38), die gemeinsam in Form eines Gelenkes an ihren oberen Enden um eine dritte Achse (41) miteinander verbunden sind,
- zwei Achsen (42, 43), die jeweils mindestens eine Walze (25) tragen, wobei jede Achse in etwa senkrecht am unteren Ende eines der Gelenkarme gehalten wird.

11. Wagen nach Anspruch 10, **dadurch gekennzeichnet, dass** sich jede Walze (25) frei um eine vierte Achse (46) drehen kann, die mit einem der Gelenkarme (42, 43) verbunden ist und so zwischen den zwei Gelenkarmen (37, 38) angebracht ist, dass die Annäherung der Gelenkarme durch Drehung um die dritte Achse eine Drehbewegung der vierten Achsen, und somit der Walzen, nach oben bewirkt.

12. Wagen nach einem der Ansprüche 10 oder 11, **dadurch gekennzeichnet, dass** die Rollen (24), auf die beide Tragevorrichtungen (21, 22) montiert sind, fest am Ende der Achsen angebracht sind.

13. Wagen nach einem der Ansprüche 11 oder 12, **dadurch gekennzeichnet, dass** er außerdem folgendes aufweist:
- einen Sicherheitsriemen (49), dessen Enden jeweils mit den zwei Achsen (42, 43) verbunden sind, wobei dieser Sicherheitsriemen um den Umfang des Fahrzeugrads (30) gelegt wird, nachdem die Walzen (25) auf beiden Seiten mit dem Rad in Berührung gekommen sind;
- ein zweiter Spannmechanismus (50) zum Spannen dieses Sicherheitsriemens, nachdem er um das Fahrzeugrad gelegt wurde;
dabei wird der Sicherheitsriemen (49) automatisch um das Fahrzeugrad festgezogen, wenn der Wagen in die Hebelage übergeht, wobei das Fahrzeugrad gegenüber den Achsen an denen die Enden des Sicherheitsriemens befestigt sind, angehoben wird.

14. Wagen nach Anspruch 13, **dadurch gekennzeichnet, dass** der zweite Spannmechanismus (50) eine Nocke mit einer Klaue aufweist.

15. Wagen nach einem der Ansprüche 1 bis 9, **dadurch gekennzeichnet, dass** die zwei Tragevorrichtungen (58, 59) folgendes aufweisen:
- zwei Teleskopelemente (61, 62);
- zwei Querträger (63, 64), die jeweils mindestens eine Walze (25) tragen, wobei jeder Querträger in etwa senkrecht zum freien Ende eines der Teleskopelemente befestigt ist.

16. Wagen nach Anspruch 15, **dadurch gekennzeichnet, dass** die Rollen (60), auf denen die zwei Tragevorrichtungen montiert sind, schwenkbar unter den Querträgern (63, 64) angebracht sind.

17. Wagen nach einem der Ansprüche 1 bis 16, **dadurch gekennzeichnet, dass** er Mittel zum Verriegeln des Wagens in der Hebelage (66, 67; 68, 69) aufweist.

## Claims

1. Dolly of the type for lifting and supporting at least one wheel (30) of a vehicle (16), with a view to its being towed and/or handled, the said dolly comprising two supporting assemblies mounted on castors (24; 60) and each provided with at least one roller (25), and means for moving the two supporting assemblies in relation to each other, it being possible for the said dolly to adopt in particular the following two positions:
- a rest position, in which the two supporting assemblies are separated from each other so that the dolly can be placed under the wheel, with the rollers positioned either side of the wheel,
- a lifting position, in which the two supporting assemblies are brought towards each other so that the wheel is lifted and supported by the rollers,
**characterized in that** the said means of movement (23) comprise:
- a lifting strap (26) having two ends that are each secured to one of the two supporting assemblies (21, 22; 58, 59);
- means (27, 29) for acting on the said lifting strap (26) so as to induce the said dolly to pass from the rest position to the lifting position.

2. Dolly according to claim 1, **characterized in that** the said means for acting on the lifting strap comprise an eccentric device (27) to which one of the two ends of the lifting strap is fixed, and which is mounted pivotingly about a first eccentric spindle (28) on one of the two supporting assemblies, the passage of the eccentric device into an eccentric position making it possible to produce traction on the lifting strap, that is assumed to have been previously put under tension, and consequently the passage of the dolly into the lifting position.

3. Dolly according to claim 2, **characterized in that** the said means for acting on the lifting strap additionally comprise first means (29) for tensioning the lifting strap, enabling the two supporting assemblies to be brought towards each other, until the rollers are in contact with the wheel, either side thereof.

4. Dolly according to claim 3, **characterized in that** the said first tensioning means (29) comprise a tensioning device with a ratchet.

5. Dolly according to any of claims 2 to 4, **characterized in that** the said eccentric device (27) comprises :
- a main body (31) which is mounted pivotingly about the said first eccentric spindle, on one of the two supporting assemblies;
- a hook (32), to which one of the two ends of the lifting strap is attached and which is mounted pivotingly about a second spindle, on one end of the said principal body, so that when the eccentric device passes into the eccentric position, the said second spindle passes beyond the said first eccentric spindle.

6. Dolly according to any one of claims 2 to 5, **characterized in that** the said eccentric device (27) comprises means (34) for cooperating with the outer actuating means (35).

7. Dolly according to claim 6, **characterized in that** the said cooperating means (34) comprise a sleeve, and **in that** the said outer actuating means (35) comprise a drawbar of which one end (36) has a form that permits it to engage in the said sleeve of the eccentric device.

8. Dolly according to claim 1, **characterized in that** the said means for acting on the lifting strap comprise the first means (29) for tensioning the lifting strap, enabling the two supporting assemblies to move towards each other, first of all until the rollers are in contact with the wheel, either side thereof, and then until the movement of the rollers towards each other induces the passage of the said dolly into the said lifting position.

9. Dolly according to claim 8, **characterized in that** the said first tensioning means (29) comprise a tensioning device with a ratchet.

10. Dolly according to any one of claims 1 to 9, **characterized in that** the said two supporting assemblies (21,22) comprise :
- two arms (37,38), articulated together in a pivoting manner, at their upper ends, about a third spindle (41);
- two shafts (42,43) each supporting at least one roller (25), each shaft being attached, substantially perpendicularly, onto the lower end of one of the two articulated arms.

11. Dolly according to claim 10, **characterized in that** each roller (25) rotates idly about a fourth spindle (46) secured to one of the shafts (42,43) and placed between the two articulated arms (37,38) so that the movement of the two articulated arms towards each other by rotation about the said third spindle, induces an upward rotational movement of the fourth spindles and hence of the rollers.

12. Dolly according to either of claims 10 or 11, **characterized in that** the castors (24) on which the two supporting assemblies (21,22) are mounted, are fixed castors mounted on the ends of the said shafts.

13. Dolly according to either of claims 11 or 12, **characterized in that** it additionally comprises :
- a safety strap (49) having two ends each secured to one of the two shafts (42,43), the said safety strap being designed to be positioned on the periphery of the wheel (30) after the rollers (25) have been put into contact with the wheel, either side thereof;
- second means (50) for tensioning the said safety strap, assumed to be previously positioned on the periphery of the wheel,
the said safety strap (49) automatically encircling the wheel, by tightening, when the dolly passes into the lifting position, the wheel lifting in relation to the shafts to which the ends of the safety strap are attached.

14. Dolly according to claim 13, **characterized in that** the said second tensioning means (50) comprise a dog cam.

15. Dolly according to any one of claims 1 to 9, **characterized in that** the said two supporting assemblies (58,59) comprise :
- two telescopic elements (61,62);
- two traversing elements (63,64) each supporting at least one roller (25), each traversing element being attached, substantially perpendicularly, onto the free end of one of the two telescopic elements.

16. Dolly according to claim 15, **characterized in that** the castors (60) on which the two supporting assemblies are mounted are castors mounted pivotingly under the traversing elements (63,64).

17. Dolly according to any one of claims 1 to 16, **characterized in that** it comprises means (66,67; 68,69) for locking the said dolly in the lifting position.
